# EUROPÄISCHE PATENTSCHRIFT

(11) **EP 0 931 963 B1**
(45) Veröffentlichungstag und Bekanntmachung des Hinweises auf die Patenterteilung: **19.11.2003**
(21) Anmeldenummer: 98122884.4
(22) Anmeldetag: 02.12.1998
(51) Int. Cl.: F16K 11/07, F16K 27/04

(54) **Wegeventil**
Directional valve
Distributeur

(30) Priorität: 22.01.1998 DE 19802289
(43) Veröffentlichungstag der Anmeldung: 28.07.1999
(73) Patentinhaber: ROBERT BOSCH GMBH, 70442 Stuttgart (DE)
(72) Erfinder: Widera, Joerg, 70839 Gerlingen (DE)
(74) Vertreter: Maiwald Patentanwalts GmbH

(56) Entgegenhaltungen:
- EP-A- 0 164 529
- EP-A- 0 305 252
- DE-A- 3 114 129
- GB-A- 1 433 796
- PATENT ABSTRACTS OF JAPAN vol. 013, no. 545 (M-902), 6. Dezember 1989 (1989-12-06) & JP 01 224579 A (HAAMO SOGO KENKYUSHO:KK), 7. September 1989 (1989-09-07)

## Beschreibung

### Stand der Technik

Die Erfindung geht von einem Wegeventil entsprechend der Gattung des Anspruchs 1 aus. Ein derartiges Wegeventil, wie es beispielsweise aus der DE-OS 19 20 473 bereits bekannt ist, wird insbesondere in der Pneumatik eingesetzt.

Um verschiedene Bauvarianten mit einer möglichst geringen Anzahl unterschiedlicher Einzelteile zu ermöglichen, weist das bekannte Wegeventil ein aus mehreren Ringkörpern bestehendes Gehäuse auf. In dessen Innenraum ist ein Längsschieber zur Steuerung eines Druckmittelflusses durch das Wegeventil längsverschiebbar geführt. Die einzelnen Ringkörper des Gehäuses sind mittels Halteklammern miteinander verbunden. Zur Abdichtung des Spaltes zwischen zwei benachbarten Ringkörpern sind Dichtkörper eingesetzt, die gleichzeitig zur Führung des Längsschiebers dienen.

Nachteilig bei dieser bekannten Bauform eines Wegeventils ist, daß die einzelnen Ringkörper nicht ausreichend zueinander zentrierbar sind. Mit zunehmender Anzahl von Ringkörpern kann dadurch ein relativ großer Fluchtungsfehler entstehen, der im Extremfall zum Klemmen des Längsschiebers im Innenraum oder zu unerwünschten Undichtigkeiten zwischen benachbarten Arbeitskammern des Wegeventils führen kann. Außerdem vermögen die Halteklammern dem Gehäuse keine ausreichende Formstabilität zu verleihen, da sie sich aus Montagegründen lediglich über einen Teil des Gehäuseumfangs erstrecken. Die Anzahl der auf diese Art und Weise verbindbaren Ringkörper ist demzufolge aus funktionstechnischen Gründen relativ begrenzt. Die erforderlichen Dichtkörper zur Abdichtung des Gehäuses erhöhen außerdem die Zahl der Einzelteile, den Montageaufwand und die Kosten.

Aus der EP 0 305 252 A1 ist ein Wegeventil bekannt, dessen Gehäuse aus mehreren, axial hintereinanderliegenden und miteinander verbundenen Segmenten besteht. Der Querschnitt der einzelnen Segmente ist im wesentlichen ringförmig und weist einen komplizierten Konturverlauf auf. Es kommen zwei Arten von Segmenten zur Anwendung, die abwechselnd miteinander verbunden werden. Die Befestigung der einzelnen Segmente untereinander erfolgt durch eine alle Segmente umgreifende Gehäuseschale.

Die JP 01 224 579 offenbart ein Gehäuse für eine Wegeventil, welches ebenfalls aus verschiedenartigen Segmenten besteht, die axial hintereinanderliegend miteinander verbunden sind. Ferner sind auch hier separate Dichtungselemente zwischen den einzelnen, verschiedenartigen Segmenten erforderlich, um die Dichtheit sicherzustellen.

Es ist daher die Aufgabe der vorliegenden Erfindung ein aus einzelnen Segmenten bestehendes Gehäuse für ein Mehrwegeventil dahingehend weiterzuverbessern, dass weniger Einzelteile erforderlich sind, die sich einfach montieren lassen.

### Vorteile der Erfindung

Demgegenüber weist ein Wegeventil mit den kennzeichnenden Merkmalen des Anspruchs 1 den Vorteil auf, dass sein Gehäuse aus montagefertig herstellbaren Segmenten besteht, die koaxial miteinander verbindbar sind, ohne hierzu zusätzlich Verbindungs- oder Dichtelemente zu benötigen. Die Segmenten sind kostengünstig als Drehteile oder in Mehrfachwerkzeugen spritzgusstechnisch produzierbar, wobei sich bei diesen Herstellungsprozessen die für eine möglichst ungehinderte Druckmittelströmung durch das Wegeventil relevanten Steuerkanten strömungstechnisch optimal ausbilden lassen. Außerdem wird die für die Führung des Schiebers notwendige Oberflächengüte der Innenwandung des Gehäuses ohne anschließende Nachbearbeitung erreicht. Das erfindungsgemäße Wegeventil erlaubt eine Vielzahl von Bauvarianten mit verhältnismäßig wenig verschiedenen Einzelteilen. Zudem weist das Wegeventil ein Gehäuse mit relativ hoher Stabilität auf und kann vollautomatisch und dadurch kostengünstig montiert werden. Weitere Vorteile und vorteilhafte Weiterbildungen der Erfindung ergeben sich aus den Unteransprüchen oder der Beschreibung.

### Zeichnung

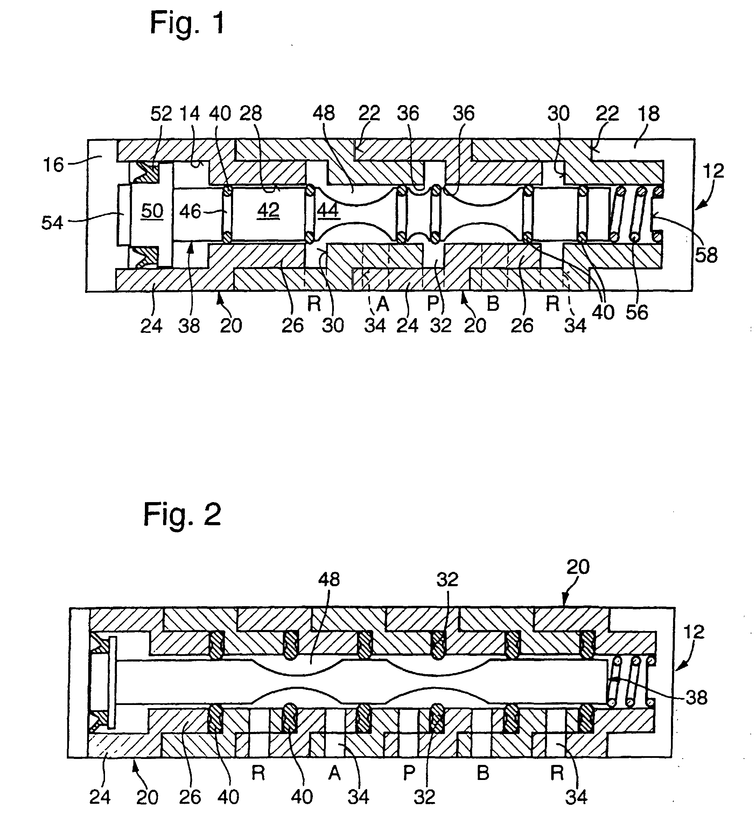

Ausführungsbeispiele der Erfindung sind in der Zeichnung dargestellt und in der nachfolgenden Beschreibung näher erläutert. Figur 1 zeigt ein erstes Ausführungsbeispiel eines Wegeventils im Längsschnitt; ein zweites Ausführungsbeispiel eines Wegeventils ist in Figur 2, ebenfalls im Längsschnitt, dargestellt.

### Beschreibung der Ausführungsbeispiele

Das in Figur 1 dargestellte Wegeventil 10 besteht aus einem Gehäuse 12, in dem eine durchgehende Schieberbohrung 14 ausgebildet ist. Diese Schieberbohrung 14 ist an ihren stirnseitigen Enden von einem ersten Abschlußdeckel 16 und einem zweiten Abschlußdeckel 18 nach außen druckdicht verschlossen. Das Gehäuse 12 ist aus mehreren axial hintereinanderliegenden Segmenten 20 aufgebaut. Die Anzahl der Segmente 20 ist anwendungsspezifisch wählbar, im Ausführungsbeispiel sind exemplarisch vier Segmente 20 dargestellt.

Bei diesen Segmenten 20 handelt es sich um hülsenförmige Bauteile, die an ihrem Außenumfang einen zentrisch angeordneten, umlaufenden Absatz 22 aufweisen. Dieser Absatz 22 teilt die Segmente 20 in einen im Außendurchmesser größeren Kopfabschnitt 24 und einen demgegenüber im Außendurchmesser kleineren Zentrierabschnitt 26 ein. Der Kopfabschnitt 24 ist länger als der Zentrierabschnitt 26 ausgeführt und ist im Gegensatz zum Zentrierabschnitt 26 nicht auf eine kreisförmige Außenkontur eingeschränkt. Der an der Übergangsstelle vom Kopfabschnitt 24 zum Zentrierabschnitt 26 liegende Absatz 22 verläuft senkrecht zur Längsachse der Segmente 20 und weist eine Höhe auf, die auf die Wandungsdicke der Segmente 20 im Bereich des Kopfabschnitts 24 abgestimmt ist. Die einzelnen Segmente 20 lassen sich dadurch mit ihren Kopfabschnitten 24 auf die Zentrierabschnitte 26 eines benachbarten Segments 20 aufschieben und zentrieren sich dabei gegenseitig.

Die Verbindung zwischen dem Kopfabschnitt 24 des ersten Segments 20 und dem Zentrierabschnitt 26 des zweiten Segments 20 kann als Preßverbindung ausgebildet sein. Die Endlage zweier miteinander verbundener Segmente 20 ist erreicht, wenn das aufgeschobene zweite Segment 20 mit der Stirnfläche seines Kopfabschnitts 24 am Absatz 22 des ersten Segments 20 bündig anliegt. Eine gegenseitige Fixierung der Segmente 20 wird mittels einer in der Figur 1 nicht dargestellten Klebung oder einer Schweißung im Bereich des Absatzes 22 erreicht. Beide Methoden lassen sich vollautomatisch durchführen und stellen eine relativ hohe Stabilität des fertigen Gehäuses 12 sicher.

Die Schieberbohrung 14 des Gehäuses 12 wird von den Durchgangsbohrungen 28 der einzelnen Segmente 20 gebildet. Jede dieser Durchgangsbohrungen 28 weist eine Innenwandung mit jeweils einem entsprechend des ersten Absatzes 22 ausgebildeten zweiten Absatz 30 auf. Dieser zweite Absatz 30 ist im Bereich des Kopfabschnitts 24 derart angeordnet, daß die Segmente 20 eine durchgehend konstante Wandungsdicke aufweisen. Dies ermöglicht eine kostengünstige Herstellung der Segmente 20 in einem Spritzgießverfahren aus Kunststoff oder aus Aluminiumlegierungen.

Aufgrund der unterschiedlichen axialen Ausdehnung des Kopfabschnitts 24 gegenüber dem Zentrierabschnitt 26 weist die Schieberbohrung 14 des fertigen Gehäuses 12 Ringspalte 32 auf, die sich jeweils zwischen der Stirnfläche des Zentrierabschnitts 26 des ersten Segments 20 und dem zweiten Absatz 30 des zweiten, darauf aufgeschobenen Segments 20 ergeben. Im Bereich dieser Ringspalte 32 sind beim Ausführungsbeispiel drei der insgesamt fünf beispielhaft gezeichneten Anschlüsse 34 angeordnet. Diese Anordnung der Anschlüsse 34 hat den Vorteil, daß sich die für eine gute Durchströmung des Wegeventils 10 mit Druckmittel relevanten Kanten 36 an den Stirnseiten der Zentrierabschnitte 26 bzw. an den zweiten Absätzen 30 der Durchgangsbohrung 28 bereits bei der Herstellung der Segmente 20 strömungstechnisch optimiert ausbilden lassen. Eine diesbezüglich am fertiggestellten Gehäuse 12 durchzuführende Nachbearbeitung dieser Kanten 36 ist somit nicht erforderlich.

Die restlichen Anschlüsse 34 des Wegeventils 10 sind im Überlappungsbereich der Kopfabschnitte 24 mit den Zentrierabschnitten 26 angeordnet. Sie sind, zusammen mit den übrigen Anschlüssen 34, spanend oder spritzgußtechnisch hergestellt und können beispielsweise auch eine rechtwinklige Kontur aufweisen, um einen maximalen Durchfluß von Druckmittel durch das Wegeventil 10 zu gewährleisten. Die Anschlüsse 34 sind im gezeichneten Ausführungsbeispiel nach Figur 1 fluchtend zueinander angeordnet. Dies ist für eine bestimmungsgemäße Funktion des Wegeventils 10 jedoch nicht zwangsläufig erforderlich; eine am Umfang verteilte Anordnung der Anschlüsse 34 wäre ebenso denkbar.

In der Schieberbohrung 14 des Wegeventils 10 ist zur Steuerung des Druckmittelflusses ein Steuerschieber 38 längsbeweglich geführt. Dieser Steuerschieber 38 weist mehrere mit Dichtelementen 40 versehene Kolbenabschnitte 42 auf, die durch Halsabschnitte 44 miteinander verbunden sind. Die Halsabschnitte 44 haben einen geringeren Außendurchmesser als die Kolbenabschnitte 42. Die Dichtelemente 40 sind in dafür vorgesehenen Nuten 46 an den Kolbenabschnitten 42 des Steuerschiebers 38 eingesetzt und liegen umfangsseitig an der Innenwandung der Schieberbohrung 14 an.

Die Schieberbohrung 14 ist von Arbeitskammern 48 durchdrungen, die ihrerseits durch die Anschlüsse 34 des Wegeventils 10 mit einem Zulauf P, einem Rücklauf R oder einem Motoranschluß A,B verbunden sind. Abhängig von der Momentanposition des Steuerschiebers 38 wird eine Druckmittelverbindung zwischen zwei benachbarten Arbeitskammern 48 und damit zwischen zwei zugeordneten Anschlüssen 34 des Wegeventils 10 freigegeben bzw. an anderer Stelle gesperrt. Dadurch ist der Druckmittelfluß durch das Wegeventil 10 über die Position des Steuerschiebers 38 nach Richtung und Größe steuerbar.

Eine Betätigung des Steuerschiebers 38 erfolgt auf an sich bekannte Weise mittels eines Kolbens 50, der an einem der Enden des Steuerschiebers 38 angeordnet bzw. einteilig mit diesem ausgebildet ist. Dieser Kolben 50 ist umfangsseitig mit einer Lippendichtung 52 versehen, die an der Innenwandung des stirnseitigen Segments 20 anliegt. Zwischen dem ersten Abschlußdeckel 16 und dem Kolben 50 entsteht somit eine Druckkammer 54, die auf nicht dargestellte Weise mit Steuerdruckmittel beaufschlagbar ist. Mittels einer Druckkraft auf die Fläche des Kolbens 50 ist der Steuerschieber 38 entgegen der Kraft einer Druckfeder 56 verschiebbar. Im drucklosen Zustand der Druckkammer 54 bewirkt die Druckfeder 56 die Rückstellung des Steuerschiebers 38 in seine Neutralposition.

Die Druckfeder 56 ist an dem dem Kolben 50 gegenüberliegenden Ende des Steuerschiebers 38 angeordnet und stützt sich einerseits am Steuerschieber 38 selbst und andererseits am zweiten Abschlußdeckel 18 ab. Dieser zweite

Abschlussdeckel 18 ist topfförmig ausgebildet und weist an seiner der Schieberbohrung 14 zugewandten Bodenfläche einen Zentrierzapfen 58 für die Druckfeder 56 auf.

Das in Figur 2 dargestellte zweite Ausführungsbeispiel eines Wegeventils 10 unterscheidet sich vom beschriebenen ersten Ausführungsbeispiel nach Figur 1 dadurch, dass die Dichtelemente 40 statt am Steuerschieber 38 nun im Gehäuse 12 festgelegt sind. Der Steuerschieber 38 weist demzufolge keine Nuten 46 auf und ist dadurch preisgünstiger herstellbar.

Das Gehäuse 12 selbst ist identisch zu dem des ersten Ausführungsbeispiels ausgebildet, wobei die Dichtelemente 40 nun in den Ringspalten 32 zwischen zwei miteinander verbundenen Segmenten 20 angeordnet sind. Dies bedingt eine Verlegung der im ersten Ausführungsbeispiel an dieser Stelle mündenden Anschlüsse 34 zu den Überlappungsbereichen der Kopfabschnitte 24 mit den Zentrierabschnitten 26 zweier Segmente 20 hin. In ihren Funktionen und ihren sonstigen Ausbildungen sind die beiden beschriebenen Ausführungsbeispiele eines Wegeventils 10 identisch.

## Patentansprüche

1. Wegeventil (10), insbesondere für pneumatische Anwendungen, mit einem aus mehreren axial hintereinander liegenden und miteinander verbundenen Segmenten (20) bestehenden Gehäuse (12), das eine durchgehende und an ihren Enden druckdicht verschlossene Ausnehmung (14) aufweist, mit einem in der Ausnehmung (14) längs beweglich geführten Schieber (38), der zur Steuerung von Druckmittelverbindungen zwischen mindestens zwei benachbarten Arbeitskammern (48) wenigstens einen Kolbenabschnitt (42) und wenigstens einen damit verbundenen Halsabschnitt (44) aufweist und mit jeweils wenigstens einem Zulaufanschluss (P), einem Rücklaufanschluss (A) und einem Motoranschluss (A,B), denen jeweils eine Arbeitskammer (48) zugeordnet ist,
**dadurch gekennzeichnet, dass** das Gehäuse (12) aus mindestens zwei gleichartigen, benachbarten, hülsenförmigen Segmenten (20) besteht, an denen jeweils ein zum Befestigen und Einstecken des einen Segments (20) in das benachbarte Segment (20) dienender Zentrierabschnitt (26) angeordnet ist.

2. Wegeventil nach Anspruch 1, **dadurch gekennzeichnet, daß** die Zentrierabschnitte (26) mit ihren Innenwandungen die den Schieber (38) führende Ausnehmung (14) bilden.

3. Wegeventil nach einem der Ansprüche 1 oder 2, **dadurch gekennzeichnet, daß** die das Gehäuse (12) bildenden, hülsenförmigen Segmente (20) eine in ihrem Innendurchmesser wenigstens einmal abgesetzte Durchgangsbohrung (28) aufweisen und neben dem Zentrierabschnitt (26) einen dazu koaxialen Kopfabschnitt (24) haben, und daß der Übergang vom Kopfabschnitt (24) zum Zentrierabschnitt (26) als Absatz (22) ausgebildet ist.

4. Wegeventil nach Anspruch 3, **dadurch gekennzeichnet, daß** der Zentrierabschnitt (26) einen kleineren Außendurchmesser als der Kopfabschnitt (24) aufweist, und daß dieser Außendurchmesser des Zentrierabschnitts (26) auf den größeren Innendurchmesser der Durchgangsbohrung (28) im Bereich des Kopfabschnitts (24) abgestimmt ist.

5. Wegeventil nach Anspruch 3, **dadurch gekennzeichnet, daß** der Absatz (22) im Querschnitt rechtwinklig ausgebildet ist und eine ringförmige Anschlagfläche bildet.

6. Wegeventil nach einem der Ansprüche 3 bis 5, **dadurch gekennzeichnet, daß** jeweils zwei Segmente (20) im Bereich des Absatzes (22) mittels einer Klebung oder einer Schweißung miteinander verbunden sind.

7. Wegeventil nach einem der Ansprüche 1 bis 6, **dadurch gekennzeichnet, daß** die Segmente (20) montagefertig herstellbare Spritzgießteile aus Aluminium oder aus Kunststoff sind.

8. Wegeventil nach einem der Ansprüche 1 bis 7, **dadurch gekennzeichnet, daß** das Wegeventil (10) ein 5/2-Wegeventil ist.

9. Wegeventil nach einem oder mehreren der Ansprüche 3 bis 8, **dadurch gekennzeichnet, daß** der Kopfabschnitt (24) zur Ausbildung von Ringspalten (32) in der Ausnehmung (14) des Gehäuses (12) länger als der Zentrierabschnitt (26) ausgebildet ist.

10. Wegeventil nach Anspruch 9, **dadurch gekennzeichnet, daß** wenigstens einer der Anschlüsse (P,R) des Wegeventils (10) im Bereich eines Ringspalts (32) angeordnet ist, der als Arbeitskammer (48) dient.

11. Wegeventil nach Anspruch 9 oder 10, **dadurch gekennzeichnet, daß** mindestens ein Motoranschluß (A,B) in einem Bereich liegt, in dem sich Kopfabschnitt (24) und Zentrierabschnitt (26) überdecken, und daß auf dem Schieber (38) Dichtringe (40) angeordnet sind, die mit der Wandung der Ausnehmung (14) des Gehäuses (12) zusammenwirken.

12. Wegeventil nach Anspruch 9, **dadurch gekennzeichnet, daß** in jedem Ringspalt (32) zwischen benachbarten Segmenten (20) jeweils ein Dichtring (40) angeordnet ist, der mit dem Schieber (38) zusammenwirkt und daß die Anschlüsse (P,R,A,B) jeweils zwischen zwei benachbarten Dichtringen (40) liegen.

## Claims

1. Directional valve (10), particularly for use in pneumatic applications, comprising:
a housing (12);
wherein the housing (12) comprises a plurality of segments (20) which are arranged axially one after the other and which are connected to each other;
wherein the housing (12) comprises a continuous recess (14);
wherein the recess (14) comprises a pressure-tight sealing at the ends of the segments (20);
wherein a slider (38) is longitudinally slidably directed in the recess (14);
wherein the slider (38) comprises at least one piston section (42) and at least one neck section (44), the neck section (44) being connected to the piston section (42), for controlling pressure means connections between at least two adjacent working chambers (48); and
wherein the respective directional valve (10) comprises at least one supply connection (P), a reflux connection (A) and a motor connection (A, B);
wherein a respective working chamber (48) is assigned to the at least one supply connection (P), the reflux connection (A) and the motor connection (A, B),
**characterized in that** the housing (12) comprises at least two uniform, adjacent, bush shaped segments (20);
wherein each segment comprises a centring section (26) for securing and inserting one segment (20) into the adjacent segment (20).

2. Directional valve according to claim 2,
**characterized in that** the inner walls of the centring sections (26) form the recess (14) which directs the slider (38).

3. Directional valve according to one of claims 1 or 2,
**characterized in that** the bush shaped segments (20), which form the housing (12), comprise a through hole (28);
wherein the inner diameter of the through hole (28) comprises at least one step; and a head section (24);
wherein the head section (24) is arranged adjacent and coaxially to the centring section (26); and
that the transition from the head section (24) to the centring section (26) is formed as a step (22).

4. Directional valve according to claim 3,
**characterized in that** the centring section (26) comprises an outer diameter which is smaller than the head section (24); and
that the outer diameter of the centring section (26) corresponds to the bigger inner diameter of the through hole (28) in the region of the head section (24).

5. Directional valve according to claim 3,
**characterized in that** the step (22) comprises a rectangular cross-section and an annular block surface.

6. Directional valve according to one of claims 3 - 5,
**characterized in that** two segments (20) are connected to each other;
wherein the connection is disposed in the region of the step (22); and
wherein the connection is achieved by means of bonding or welding.

7. Directional valve according to one of claims 1 - 6,
**characterized in that** the segments (20) are injection molded units;
wherein the injection molded units are aluminium units or plastic units; and
wherein the injection molded units are fabricated ready for mounting.

8. Directional valve according to one of claims 1 - 7,
**characterized in that** the directional valve (10) is a 5/2- directional valve.

9. Directional valve according to one or more of the claims 3 - 8,
**characterized in that** the head section (24) is longer than the centring section (26) for providing annular gaps (32) in the recess (14) of the housing (12).

10. Directional valve according to claim 9,
**characterized in that** at least one of the connections (P, R) of the directional valve (10) is disposed in the region of an annular gap (32);
wherein the annular gap (32) acts as working chamber (48).

11. Directional valve according to claims 9 or 10,
**characterized in that** at least one motor connection (A, B) is disposed in a region in which the head section (24) and the centring section (26) overlap; and
that the slider (38) comprises sealing rings (40);
wherein the sealing rings (40) cooperate with the wall of the recess (14) of the housing (12).

12. Directional valve according to claim 9,
**characterized in that** a respective sealing ring (40) is disposed in each annular gap (32) between adjacent segments (20);
wherein the respective sealing ring (40) cooperates with the slider (38); and
that the connections (P, R, A, B) are each disposed between two adjacent sealing rings (40).

## Revendications

1. Distributeur (10), notamment pour des applications pneumatiques, qui comporte un boîtier (12) se composant de plusieurs segments (20) disposés axialement les uns derrière les autres et reliés les uns aux autres, boîtier qui est pourvu d'un creux (14) continu et fermé à ses extrémités de manière à retenir la pression, qui comporte un coulisseau (38) guidé de manière mobile le long du creux (14) et pourvu d'au moins un segment de piston (42) et d'au moins un tronçon de gorge (44) relié à celui-ci en vue du réglage de connexions pour le milieu de pression entre au moins deux chambres de travail voisines (48) et qui est pourvu d'au moins un raccord d'amenée (P), d'un raccord de reflux (A) et d'un raccord moteur (A,B) respectivement auxquels se trouve adjointe chaque fois une chambre de travail (48), **caractérisé en ce que** le boîtier (12) se compose d'au moins deux segments (20) voisins de la même nature se présentant sous la forme d'une douille, un segment de centrage (26) étant aménagé sur chacun des segments (20) respectifs pour servir à l'introduction et à la fixation de l'un des segments (20) dans le segment voisin (20).

2. Distributeur suivant la revendication 1, **caractérisé en ce que** les segments de centrage (26) forment avec leurs parois intérieures le creux (14) guidant le coulisseau (38).

3. Distributeur suivant l'une des revendications 1 ou 2, **caractérisé en ce que** les segments (20) sous forme de douilles constituant le boîtier (12) présentent un alésage traversant (28) qui est étagé au moins une fois dans son diamètre intérieur et possèdent à côté du tronçon de centrage (26) un tronçon de tête (24) coaxial par rapport à celui-là et **en ce que** la transition du tronçon de tête (24) vers le tronçon de centrage (26) est façonnée en forme de palier (22)

4. Distributeur suivant la revendication 3, **caractérisé en ce que** le tronçon de centrage (26) présente un diamètre extérieur plus petit que le tronçon de tête (24) et **en ce que** ce diamètre extérieur du tronçon de centrage (26) est accordé sur le diamètre intérieur plus grand de l'alésage traversant (28) dans la région du tronçon de tête (24).

5. Distributeur suivant la revendication 3, **caractérisé en ce que** le palier (22) est façonné suivant une section transversale à angles droits et forme une surface d'arrêt annulaire.

6. Distributeur suivant l'une des revendications 3 à 5, **caractérisé en ce** chaque fois deux segments (20) sont reliés l'un à l'autre dans la région du palier (22) au moyen d'un collage ou d'un soudage.

7. Distributeur suivant l'une des revendications 1 à 6, **caractérisé en ce que** les segments (20) constituent des pièces moulées par injection en aluminium ou en une matière plastique qui sont prêtes au montage.

8. Distributeur suivant l'une des revendications 1 à 7, **caractérisé en ce que** le distributeur (10) constitue un distributeur 5/2.

9. Distributeur suivant l'une quelconque ou plusieurs des revendications 3 à 8, **caractérisé en ce que** le tronçon de tête (24) est façonné avec une longueur plus grande que celle du tronçon de centrage (26) de manière à former des aires annulaires (32) dans le creux (14) du boîtier (12).

10. Distributeur suivant la revendication 9, **caractérisé en ce qu'**au moins l'un des raccords (P, R) du distributeur (10) est disposé dans la zone de l'aire annulaire (32) qui sert comme chambre de travail (48).

11. Distributeur suivant la revendication 9 ou 10, **caractérisé en ce qu'**au moins un raccord moteur (A, B) se trouve dans une zone dans laquelle le tronçon de tête (24) et le tronçon de centrage (26) se recouvrent et **en ce que** sur le coulisseau (38) sont aménagés des anneaux d'étanchéité (40) qui agissent en collaboration avec la paroi du creux ( 14) du boîtier (12).

12. Distributeur suivant la revendication 9, **caractérisé en ce que** dans chaque aire annulaire (32) située entre des segments voisins (20) il est disposé à chaque fois un anneau d'étanchéité (40) qui agit conjointement avec la coulisseau (38) et **en ce que** les raccords (P, R, A, B) se situent à chaque fois entre deux anneaux d'étanchéité (40) voisins.
